# EUROPÄISCHE PATENTANMELDUNG

(11) **EP 1 284 225 A1**
(43) Veröffentlichungstag der Anmeldung: **19.02.2003**
(21) Anmeldenummer: 02016616.1
(22) Anmeldetag: 25.07.2002
(51) Int. Cl.: B65G 1/04

(54) **Vorrichtung zum Transportieren, Entnehmen und Belegen von Werkstückträgern**

(30) Priorität: 13.08.2001 DE 10138619
(71) Anmelder: Keller, Christoph, Dipl.-Ing., D-78234 Engen/Welschingen (DE)
(72) Erfinder: Keller, Christoph, Dipl.-Ing., D-78234 Engen/Welschingen (DE)
(74) Vertreter: Weiss, Peter, Dr.

(57) **Zusammenfassung**

Bei einer Vorrichtung zum Transportieren, Entnehmen und Belegen von Werkstückträgern (1) und/oder Werkstücken (2), insbesondere Transportkörben in oder aus einem Lagersystem (7), insbesondere Hochregallager mit einer Auszugsvorrichtung (16) und einer Hebeeinrichtung (13), soll die Auszugsvorrichtung (16) eigenständig angetrieben von der Hebeeinrichtung (13) in das Lagersystem (7) einund ausfahrbar sein.

## Beschreibung

Die vorliegende Erfindung betrifft eine Vorrichtung zum Transportieren, Entnehmen und Belegen von Werkstückträgern und/oder Werkstücken, insbesondere Transportkörben in oder aus einem Lagersystem, insbesondere Hochregallager mit einer Auszugsvorrichtung und einer Hebeeinrichtung.

Derartige Vorrichtung zum Transportieren, Entnehmen und Belegen von Werkstückträgern, Werkstücken oder Transportkörben sind in vielfältiger Form und Ausführung auf dem Markt bekannt und werden insbesondere in Hochregallagern eingesetzt.

Beispielsweise sind Werkstückträger bekannt, die mit Rollen bestückt sind. Diese werden dann mittels einer Hebeeinrichtung einer Vorrichtung in ein Regalsystem eingefahren.

Nachteilig ist, dass derartige Werkstückträger einen höheren Raumbedarf einnehmen, was eine geringere Lagerdichte zur Folge hat. Zudem liegen derartige Werkstückträger nicht plan und homogen permanent auf den entsprechenden Profilen der Lagersysteme auf, da diese meist, im beladenen Zustand sich verziehen.

Zudem ist das Lagersystem beschränkt auf einen bestimmten Typ von Werkstückträger, was ebenfalls unerwünscht ist.

Ferner ist nachteilig, dass trotz herkömmlicher Vorrichtungen ein Transportieren, ein Entnehmen und ein Belegen von nur einem Werkstückträger und einem Werkstück in einem Lagersystem oder aus einem Lagersystem heraus beschränkt ist. Hierdurch sind hohe Transportzeiten, Transportkosten und hohe Wege zurückzulegen, was unerwünscht ist.

Der vorliegenden Erfindung liegt daher die Aufgabe zugrunde eine Vorrichtung der eingangs genannten Art zu schaffen, welche die genannten Nachteile beseitigt, mit welcher die Transportmöglichkeiten und die Koordinationsmöglichkeiten erhöht werden, die Lagerdichte verbessert wird und die Transportgeschwindigkeiten erheblich gesteigert werden.

Zur Lösung dieser Aufgabe führt, dass die Auszugsvorrichtung eigenständig angetrieben von der Hebeeinrichtung in das Lagersystem ein- und ausfahrbar ist.

Bei der vorliegenden Erfindung ist von wesentlicher Bedeutung, dass eine Auszugsvorrichtung eigenständig angetrieben, von einer Hebeeinrichtung selbständig vorzugsweise zwischen C-Profile von Lagersystemen einfahrbar ist, wobei die Hebeeinrichtung vollständig verlassen wird.

Oberhalb der C-Profile sind beliebige Gegenstände, Werkstückträger, Werkstücke oder insbesondere Transportkörbe für Aluminiumprofile im Lagersystem eingelagert und können durch Inbetriebnahme einer Hubeinrichtung, der Auszugseinrichtung aufgenommen werden, wobei diese dann mit dem entsprechenden aufgenommenen Werkstückträger zurück auf die Hebeeinrichtung aus den C-Profilen herausbewegbar ist, um den Werkstückträger nach dem Ablassen der Hebeeinrichtung einem Ablageplatz der Vorrichtung oder einer weiteren Bearbeitung zu übergeben.

Damit die Vorrichtung bspw. den entnommenen Werkstückträger nicht an seine gewünschte Position bspw. zur weiteren Verarbeitung oder zum Abtransport übergeben muss, kann nach der Entnahme der Werkstückträger auf zumindest einem Ablageplatz der Vorrichtung abgelegt werden. Hierdurch ist es möglich, bspw. mehrere Werkstückträger bzw. Werkstücke mittels der Auszugvorrichtung aus dem Lagersystem bzw. aus dem Hochregallager zu entnehmen, und auf der Vorrichtung zwischenzulagern. Dabei können auch bspw. für ein und den selben Auftrag benötigte unterschiedliche Werkstücke bzw. Profile aus dem Lagersystem entnommen werden, um dann anschliessend diese der weiteren Bearbeitung oder Verarbeitung zuzuführen. Hierdurch können erhebliche Transportzeiten durch die Zwischenspeicherung bzw. Pufferung von Werkstückträgern oder Werkstücken auf der Vorrichtung eingespannt werden.

Auch zum Einlagern bzw. zum Belegen von bspw. gefüllten Werkstückträgern bzw. Werkstücken im Lagersystem können mehrere Werkstückträger auf den Ablageplätzen und auf der Auszugsvorrichtung aufgenommen werden, um diese dann anschliessend in das Lagersystem abzulegen.

Durch entsprechende Rollengänge und/oder Quertransporteinrichtungen, die im Bereich der Lagerplätze vorgesehen sind, ist eine Übergabe an die Hebeeinrichtung bzw. an die Auszugsvorrichtung möglich. Auch soll daran gedacht sein, quer zur Transportrichtung der Vorrichtung direkt von den Ablageplätzen aus, die einzelnen Werkstückträger bzw. Werkstücke in die unterste Lage des Regalsystems abzulegen bzw. überzugeben.

Ferner hat sich als besonderes vorteilhaft erwiesen, die Auszugsvorrichtung wenigstens einteilig vorzugsweise zweioder dreiteilig auszubilden, wobei die einzelnen Teile der Auszugsvorrichtung über gelenkartige Verbindungen miteinander gekoppelt sind.

Hierdurch lassen sich Unebenheiten und Ungenauigkeiten des Lagersystems je nach Befüllzustandes ausgleichen, so dass die Auszugsvorrichtung flexibler von der Hebeeinrichtung in ein C-Profil des Lagersystems einfahrbar ist, wobei die Auszugsvorrichtung derart flach ausgebildet ist, dass sie zwischen ein C-Profil des Lagers passt bzw. darin einfahrbar ist.

Dabei kann jedem Teil zumindest eine Antriebseinrichtung und zumindest eine Hubeinrichtung vorgesehen sein, um einen beliebigen Werkstückträger bzw. ein beliebiges im Regalsystem abgelegtes Werkstück anzuheben und mittels der Auszugsvorrichtung auf die Hebeeinrichtung auszufahren, um den entnommenen Werkstückträger entweder dem Ablageplatz zu übergeben oder der weiteren Verwendung oder einer weiteren Verarbeitung entsprechend zu überbringen.

Zudem ist von Vorteil, dass ein Einfahren der Auszugsvorrichtung in die C-Profile des Lagersystems sehr schnell, präzise erfolgen kann. Hierdurch unterstützen Messsysteme die Vorpositionierung der Hebeeinrichtung vor einem entsprechenden C-Profil des Lagersystems bzw. zum Belegen im Hochregallager.

Zudem hat sich als vorteilhaft erwiesen, die einzelnen Teile bzw. die Auszugsvorrichtung mit gummierten Kettenantrieben zu versehen, so dass ein gedämpftes und präzises Einfahren in die C-Profile bei hoher Haftreibung gewährleistet ist. Dies soll ebenfalls im Rahmen der vorliegenden Erfindung liegen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht einer erfindungsgemässen Vorrichtung zum Transportieren, Entnehmen und Belegen von Werkstückträgern und/oder Werkstücken in oder aus einem Hochregallager;
Figur 2 eine schematisch dargestellte Seitenansicht der Vorrichtung gemäss Figur 1;
Figur 3 eine schematisch dargestellte Rückansicht der Vorrichtung gemäss Figur 1;
Figur 4 eine Draufsicht der Vorrichtung gemäss Figur 1;
Figur 5 eine vergrössert dargestellte perspektivische Ansicht auf eine Auszugsvorrichtung der Vorrichtung;
Figur 6 eine schematisch vereinfachte dargestellte Seitenansicht der Auszugsvorrichtung;
Figur 7 eine schematisch dargestellte Draufsicht auf einen Teil eines Lagersystems mit zwischen C-Profilen eingefahrener Auszugsvorrichtung.

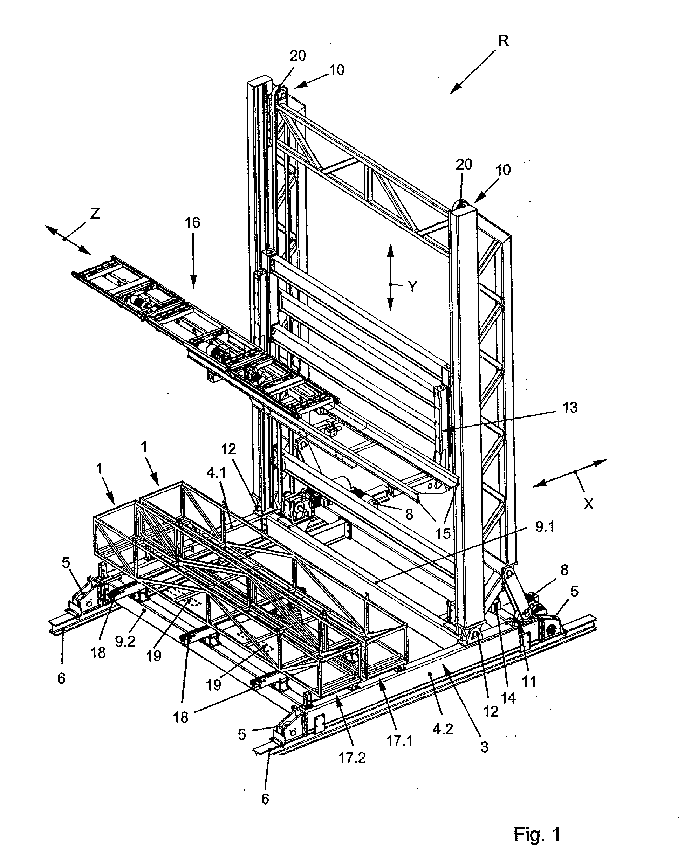

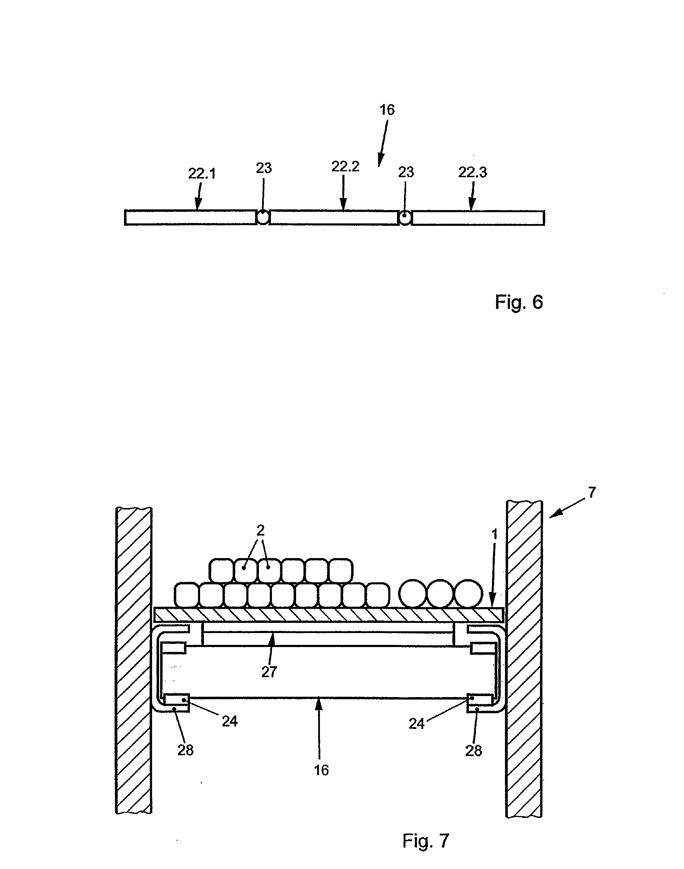

Gemäss Figur 1 weist eine erfindungsgemässe Vorrichtung R zum Transportieren, Entnehmen und Belegen von Werkstückträgern 1 und/oder Werkstücken 2, siehe Figur 7 ein Fahrgestell 3 auf, welches aus zwei parallel angeordneten Hauptträgern 4.1, 4.2 gebildet ist, welchen endseits Rollenelemente 5 zugeordnet sind. Die Hauptträger 4.1, 4.2 sind auf jeweils parallel angeordneten Schienen 6 in einer hier nicht näher dargestellten Gasse eines Lagersystems 7, siehe Figur 7, insbesondere Hochregallager oder Wabenregallager über Servomotoren 8 angetrieben hinund herbefahrbar.

Zumindest eine Traverse 9.1, 9.2 verbindet die beiden Hauptträger 4.1, 4.2, die in dargestellter Doppelpfeilrichtung X auf den Schienen 6 hin- und herbewegbar sind.

Im Bereich der Traverse 9.1 schliesst in etwa senkrecht ein Transportgestell 10 an, dessen winkelige Lage zum Hauptträger 4.1 ,4.2 über eine Verstelleinrichtung 11 veränderbar ist, wobei das Transportgestell 10 über Lagerelemente 12 winkelig gegenüber dem Hauptträger 4.1, 4.2 bzw. dem Fahrgestell 3 manuell und/oder automatisch justierbar. Hierdurch können bspw. Unebenheiten im Schienen- oder Bodenbereich oder bei Verzug des Lagersystems ausgeglichen werden.

Entlang des Transportgestelles 10 ist eine Hebeeinrichtung 13 über zumindest ein Hubmotor 14 in dargestellter Doppelpfeilrichtung Y hin- und herbewegbar bzw. verfahrbar.

Auf der Hebeeinrichtung 13 sind zwei zueinander parallel beabstandete Führungsschienen 15 vorgesehen auf welcher in dargestellter Z-Richtung eine Auszugsvorrichtung 16 in dargestellter Doppelpfeilrichtung Z hin- und herverfahrbar ist.

Im Anschluss an die Hebeeinrichtung 13 im Bereich des Hauptträgers 4.1, 4.2 schliesst zumindest ein Ablageplatz 17.1, 17.2 zur Zwischenspeicherung und/oder Pufferung des zumindest einen Werkstückträgers 1 und/oder Werkstückes 2 oder Transportkorb an. Dabei können die bspw. mittels der Hebeeinrichtung 13 aus einem Lagersystem 7 herausgeholte Werkstückträger 1 auf dem Ablageplatz 17.1 und/oder 17.2 mittels zumindest einem Rollengang 18 zwischengelagert, zwischengespeichert und gepuffert werden. Hierdurch ist auch möglich bspw. mehrere entsprechende Werkstückträger 1 auf der Vorrichtung R abzulegen bzw. aufzunehmen.

Ferner soll auch daran gedacht sein, zusätzlich, wie es hier lediglich gestrichelt angedeutet ist, quer zum Rollengang 18 zumindest eine Quertransporteinrichtung 19 vorzusehen, welche ermöglicht, dass die Werkstückträger 1 oder Werkstücke 2, die auch auf den Ablageplätzen 17.1, 17.2 abgestellt sind, bspw. direkt quer zu den Hauptträgern 4.1, 4.2 in die untersten Bereiche des Lagersystems direkt einfahrbar und/oder ausfahrbar sind. Dabei können die Quertransporteinrichtungen 19 mit einer nicht dargestellten Hubeinrichtung 27 versehen sein, um den Werkstückträger 1 oder das Werkstück 2 anzuheben und anschliessend quer zu transportieren.

Auch kann jedoch daran gedacht sein, den Rollengang 18 abzusenken so dass wahlweise ein Bewegen der Werkstückträger 1 in dargestellter Z-Richtung oder dargestellter Doppelpfeilrichtung Y möglich ist, um bspw. ein Werkstückträger 1 der Hebeeinrichtung 13, insbesondere der Auszugsvorrichtung 16 zu übergeben.

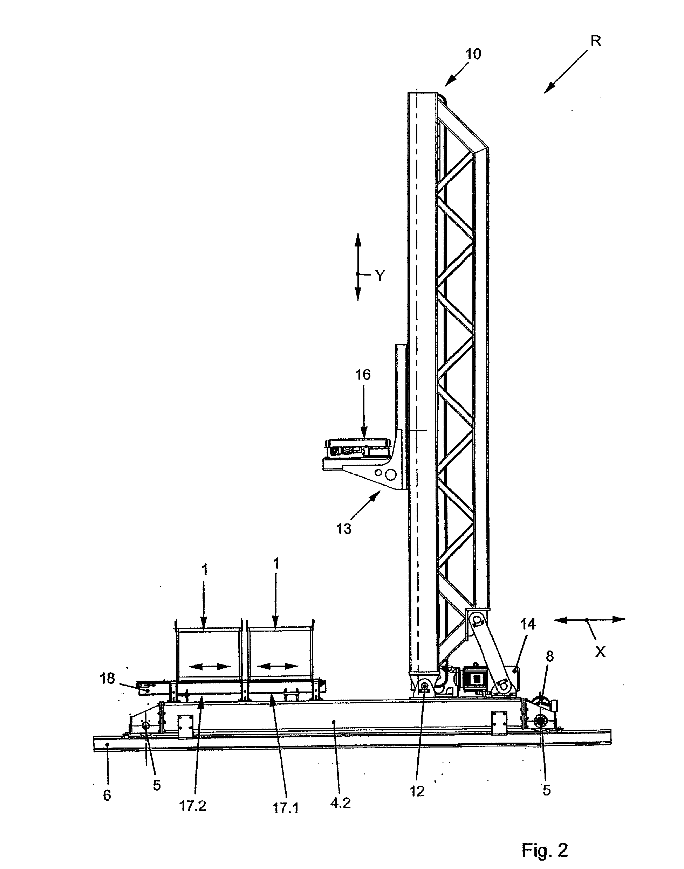

Ferner hat sich, wie es insbesondere auch in Figur 2 dargestellt ist, als vorteilhaft erwiesen, das Transportgestell 10 mittels zusätzlichen, hier nicht dargestellten Gitterstäben, zu verstärken.

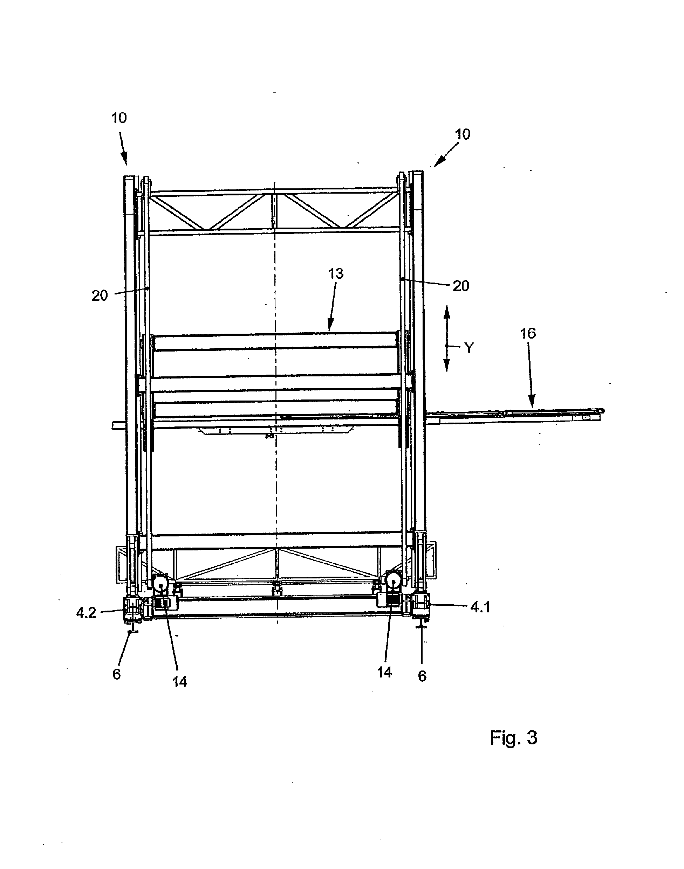

Aus Figur 3 geht hervor, dass über Antriebsketten 20 die Hebeeinrichtung 13 über vorzugsweise zwei zueinander synchronisierte Hubmotoren 14 antreibbar ist, um die Hebeeinrichtung 13, insbesondere die Auszugsvorrichtung 16 in dargestellter Doppelpfeilrichtung Y hin- und herzubewegen. Zur Synchronisation der Hubbewegung der Hebeeinrichtung 13 können die Hubmotoren 14 über eine gemeinsame Welle 21 miteinander gekoppelt bzw. verbunden sein.

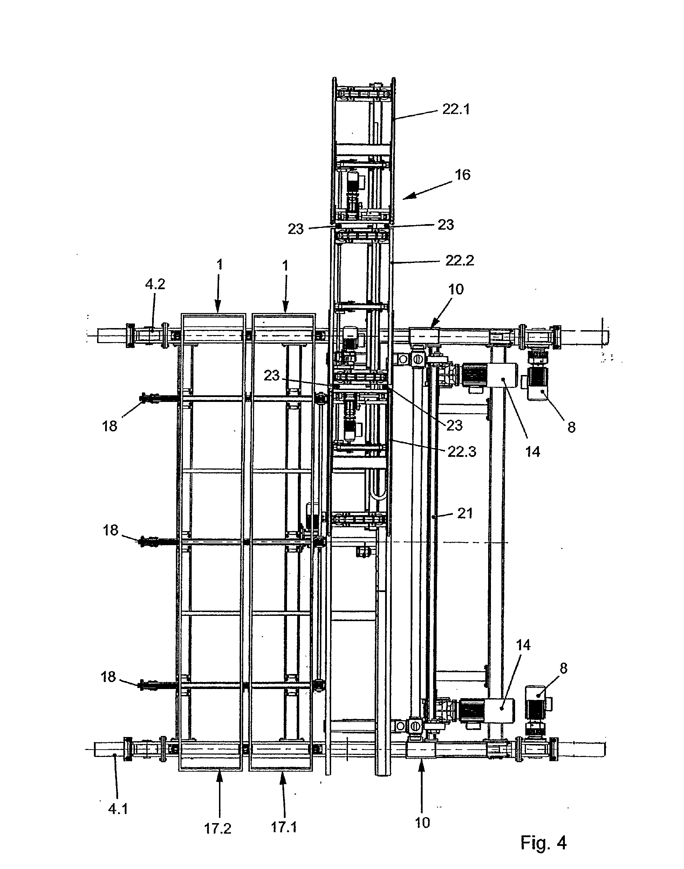

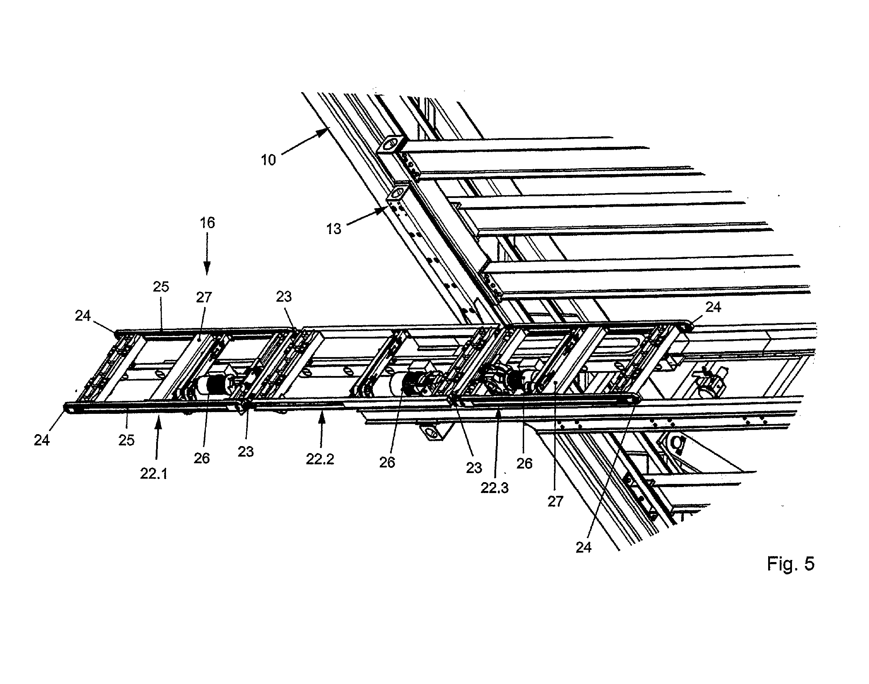

Aus Figur 4 geht ferner hervor, dass die Auszugsvorrichtung 16 aus vorzugsweise drei Teilen 22.1, 22.2 und 22.3 gebildet ist, wobei vorzugsweise die einzelnen Teile 21.1 bis 22.3 über Gelenke 23 miteinander verbunden sind, wie es auch in Figur 5 angedeutet ist.

Im bevorzugten Ausführungsbeispiel ist dem Teil 22.1 und 22.3 der Auszugsvorrichtung 16 zumindest ein Kettenantrieb 24 zugeordnet, wobei die Kettenantriebe 24 um ein entsprechendes Gestell 25 endseits parallel zueinander angeordnet und über zumindest eine Antriebseinrichtung 26 eigenständig antreibbar sind.

Ferner ist der Auszugsvorrichtung 16, insbesondere dem Teil 22.1 und 22.3 zumindest eine Hubeinrichtung 27 zugeordnet.

Wichtig bei der vorliegenden Erfindung ist, dass die Auszugsvorrichtung 16 als eigenständig verfahrbarer Satellit von der Hebeeinrichtung 13, bspw. zwischen C-Profile 28 eines Lagersystems 7 einfahrbar ist. Insbesondere durch die Unterteilung der Hebeeinrichtung 13 in mehrere einzelne Teile 22.1 bis 22.3 lassen sich bspw. Ungenauigkeiten des Lagersystems 7, je nach unterschiedlicher Beladung ausgleichen, so dass der Kettenantrieb 24 gleichmässig im C-Profil beidseitig aufliegt und die Auszugsvorrichtung 16 darin vollständig von der Hebeeinrichtung 13 eingefahren werden kann. Dabei wird von der Vorrichtung R über hier nicht dargestellte Versorgungsleitungen, die mitgeführt werden die Auszugvorrichtung 16 zur Steuerung und Inbetriebnahme von Antriebseinrichtungen 26 sowie Hubeinrichtungen 27 etc.. versorgt. Ist Auszugsvorrichtung 16 bspw. in das Lagersystem 7 zwischen zwei gegenüberliegenden C-Profile eingefahren, so kann anschliessend durch Aktivierung der Hubeinrichtung 27 ein auf den C-Profilen 28 des Lagersystems 7 abgelegter Werkstückträger 1 oder dort beliebig abgelegtes Werkstück 2 angehoben werden, und durch eigenständiges Zurückverfahren der Auszugsvorrichtung 16 auf die Hebeeinrichtung 13 der Werkstückträger 1, insbesondere das Werkstück 2 aus dem Lagersystem 7 entnommen werden.

Ferner kann die Hebeeinrichtung 13 und/oder die Auszugsvorrichtung 16 mit hier nicht näher dargestellten Wegmesssystemen, Sensorelementen od. dgl. versehen sein, um die Hebeeinrichtung 13 bzw. die Auszugsvorrichtung 16 vor einem C-Profil 28 des Lagersystems 7 zu positionieren, um dieses darin einzufahren und um einen beliebigen Werkstückträger 1 oder ein beliebiges Werkstück 2 zu entnehmen oder darin abzulegen.

| **Positionszahlenliste** | | | | | |
|---|---|---|---|---|---|
| 1 | Werkstückträger | 34 | | 67 | |
| 2 | Werkstück | 35 | | 68 | |
| 3 | Fahrgestelle | 36 | | 69 | |
| 4 | Hauptträger | 37 | | 70 | |
| 5 | Rollenelement | 38 | | 71 | |
| 6 | Schiene | 39 | | 72 | |
| 7 | Lagersystem | 40 | | 73 | |
| 8 | Servomotor | 41 | | 74 | |
| 9 | Traverse | 42 | | 75 | |
| 10 | Transportgestell | 43 | | 76 | |
| 11 | Verstelleinrichtung | 44 | | 77 | |
| 12 | Lagerelement | 45 | | 78 | |
| 13 | Hebeeinrichtung | 46 | | 79 | |
| 14 | Hubmotor | 47 | | | |
| 15 | Führungsschiene | 48 | | | |
| 16 | Auszugs-vorrichtung | 49 | | R | Vorrichtung |
| 17 | Ablageplatz | 50 | | | |
| 18 | Rollengang | 51 | | | |
| 19 | Quertransporteinrichtung | 52 | | | |
| 20 | Antriebskette | 53 | | | |
| 21 | Welle | 54 | | | |
| 22 | Teil | 55 | | | |
| 23 | Gelenk | 56 | | | |
| 24 | Kettenantrieb | 57 | | X | Doppelpfeilrichtung |
| 25 | Gestell | 58 | | Y | Doppelpfeilrichtung |
| 26 | Antriebs-einrichtung | 59 | | Z | Doppelpfeilrichtung |
| 27 | Hubeinrichtung | 60 | | | |
| 28 | C-Profil | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Transportieren, Entnehmen und Belegen von Werkstückträgern (1) und/oder Werkstücken (2), insbesondere Transportkörben in oder aus einem Lagersystem (7), insbesondere Hochregallager mit einer Auszugsvorrichtung (16) und einer Hebeeinrichtung (13),
**dadurch gekennzeichnet,**
**dass** die Auszugsvorrichtung (16) eigenständig angetrieben von der Hebeeinrichtung (13) in das Lagersystem (7) einund ausfahrbar ist.

2. Vorrichtung zum Transportieren, Entnehmen und Belegen von Werkstückträgern (1) und/oder Werkstücken (2), insbesondere Transportkörben in oder aus einem Lagersystem (7), insbesondere Hochregallager mit einer Auszugsvorrichtung (16) und einer Hebeeinrichtung (13),
**dadurch gekennzeichnet, dass** die Auszugsvorrichtung (16) eigenständig angetrieben zwischen der Hebeeinrichtung (13) in das Lagersystem (7) hin- und herverfahrbar ist.

3. Vorrichtung zum Transportieren, Entnehmen und Belegen von Werkstückträgern (1) und/oder Werkstücken (2), insbesondere Transportkörben in oder aus einem Lagersystem (7), insbesondere Hochregallager mit einer Auszugsvorrichtung (16) und einer Hebeeinrichtung (13),
**dadurch gekennzeichnet, dass** die Auszugsvorrichtung (16) wenigstens einteilig, insbesondere dreiteilig ausgebildet ist, wobei zumindest ein Teil (22.1, 22.2) der Auszugsvorrichtung (16) mit zumindest einer Antriebseinrichtung (26) versehen ist.

4. Vorrichtung zum Transportieren, Entnehmen und Belegen von Werkstückträgern (1) und/oder Werkstücken (2), insbesondere Transportkörben in oder aus einem Lagersystem (7), insbesondere Hochregallager mit einer Auszugsvorrichtung (16) und einer Hebeeinrichtung (13),
**dadurch gekennzeichnet, dass** der Auszugsvorrichtung (16) zumindest eine Hubeinrichtung (27) zugeordnet ist.

5. Vorrichtung zum Transportieren, Entnehmen und Belegen von Werkstückträgern (1) und/oder Werkstücken (2), insbesondere Transportkörben in oder aus einem Lagersystem (7), insbesondere Hochregallager mit einer Auszugsvorrichtung (16) und einer Hebeeinrichtung (13),
**dadurch gekennzeichnet, dass** neben der Hebeeinrichtung (13) zumindest ein Ablageplatz (17) zum Ablegen eines Werkstückträgers (1) und/oder Werkstückes (2), insbesondere zumindest eines Transportkorbes vorgesehen ist.

6. Vorrichtung zum Transportieren, Entnehmen und Belegen von Werkstückträgern (1) und/oder Werkstücken (2), insbesondere Transportkörben in oder aus einem Lagersystem (7), insbesondere Hochregallager mit einer Auszugsvorrichtung (16) und einer Hebeeinrichtung (13),
**dadurch gekennzeichnet, dass** die Auszugsvorrichtung (16), insbesondere die Hebeeinrichtung (13) auf eine exakte Position eines Profils (28) des Lagersystems (7) zum Einund/oder Ausfahren der Auszugsvorrichtung (16) vorpositionierbar ist, wobei ggf. zumindest ein Sensor die Lage des Profils signalisiert.

7. Vorrichtung nach wenigstens einem der Ansprüche 1 bis 6,
**dadurch gekennzeichnet, dass** zumindest ein Teil (22.1 bis 22.3) der Auszugsvorrichtung (16) mit einer Antriebseinrichtung (26) versehen ist, wobei die Auszugsvorrichtung (16) zumindest zwei Kettenantriebe (24) aufweist.

8. Vorrichtung nach wenigstens einem der Ansprüche 1 bis 7,
**dadurch gekennzeichnet, dass** die Auszugsvorrichtung (16) in zwei gegenüberliegend angeordneten C-Profilen eines Lagersystems (7), insbesondere eines Hochregallagers oder Wabenlagers ein- und ausfahrbar ist.

9. Vorrichtung nach wenigstens einem der Ansprüche 2 bis 8,
**dadurch gekennzeichnet, dass** die Auszugsvorrichtung (16) aus wenigstens zwei Teilen (22.1, 22.2), insbesondere aus drei einzelnen Teilen (22.1 bis 22.3) besteht, wobei die einzelnen Teile (22.1 bis 22.3) miteinander über zumindest ein Gelenk (23) gelenkartig miteinander verbunden sind.

10. Vorrichtung nach wenigstens einem der Ansprüche 2 bis 9, **dadurch gekennzeichnet, dass** dem zumindest einen Teil (22.1 bis 22.3) der Auszugsvorrichtung (16) zumindest eine Antriebseinrichtung (26) und zumindest eine Hubeinrichtung (27) zugeordnet ist.

11. Vorrichtung nach wenigstens einem der Ansprüche 2 bis 10, **dadurch gekennzeichnet, dass** jedem Teil (22.1 bis 22.3) zumindest eine Hubeinrichtung (27) zugeordnet ist.

12. Vorrichtung nach wenigstens einem der Ansprüche 4 bis 11, **dadurch gekennzeichnet, dass** das Fahrgestell (3) aus zwei Hauptträgern (4.1, 4.2) gebildet ist, welches über Rollenelemente (5) auf zumindest einer Schiene (6) geführt ist.

13. Vorrichtung nach wenigstens einem der Ansprüche 4 bis 12, **dadurch gekennzeichnet, dass** an das Fahrgestell (3) ein Transportgestell (10) zum Bewegen der Hebeeinrichtung (13) in etwa senkrecht anschliesst.

14. Vorrichtung nach wenigstens einem der Ansprüche 4 bis 13, **dadurch gekennzeichnet, dass** das Fahrgestell (3) über zumindest einen Servomotor (8), insbesondere über zwei Servomotoren gegenüber der Schiene (6) antreibbar ist, wobei der Hebeeinrichtung (13) zumindest ein Wegmesssystem zugeordnet ist und die Hebeeinrichtung (13) gegenüber dem Transportgestell (10) mittels zumindest einem Hubmotor (14), insbesondere zwei synchron gekoppelten Hubmotoren (14) auf- und abbewegbar ist.

15. Vorrichtung nach wenigstens einem der Ansprüche 4 bis 14, **dadurch gekennzeichnet, dass** dem zumindest einem Ablageplatz (17.1, 17.2) im Bereich des Fahrgestells (3), neben der Hebeeinrichtung (13) zumindest ein Rollengang (18) zum Heben und/oder Senken des dort zwischengelagerten Werkstückträgers (1) und/oder Werkstückes (2), insbesondere Transportkorbes vorgesehen ist.

16. Vorrichtung nach wenigstens einem der Ansprüche 4 bis 15, **dadurch gekennzeichnet, dass** dem Ablageplatz (17.1, 17.2) zumindest eine Quertransporteinrichtung (19) zum direkten Übergeben von Werkstückträgern (1) und/oder Werkstücken (2), insbesondere von Transportkörben zugeordnet ist, wobei die Quertransporteinrichtung (19) in etwa parallel zur Hebeeinrichtung (13) angeordnet ist.

17. Vorrichtung nach wenigstens einem der Ansprüche 1 bis 16, **dadurch gekennzeichnet, dass** die Auszugvorrichtung (16) von der Hebeeinrichtung (13) eigenständig angetrieben in ein Lagersystem (7), insbesondere in ein Hochregallager vollständig einfahrbar ist und durch Betätigen der Hubeinrichtung (27) ein darin eingelagerter Werkstückträger (1) und/oder Werkstück (2), insbesondere Transportkorb aufnehmbar und zurück in die Hebeeinrichtung (13) eigenständig verfahrbar ist.
